Europäisches Patentamt

(19) European Patent Office

Office européen des brevets

(11) Numéro de publication: **0 240 444**
**B1**

(12) **FASCICULE DE BREVET EUROPEEN**

(45) Date de publication du fascicule du brevet: 05.09.90

(21) Numéro de dépôt: 87440017.9

(22) Date de dépôt: 24.03.87

(51) Int. Cl.⁵: **C 21 C 5/52, G 01 F 23/24,
H 05 B 7/144**

(54) **Procédé et dispositif de contrôle du positionnement d'une lance d'injection dans un récipient metallurgique.**

(30) Priorité: 27.03.86 FR 8604479

(43) Date de publication de la demande:
07.10.87 Bulletin 87/41

(45) Mention de la délivrance du brevet:
05.09.90 Bulletin 90/36

(84) Etats contractants désignés:
AT BE DE ES GB IT LU NL SE

(56) Documents cités:
EP-A-0 104 747
AU-A- 493 464
CH-A- 264 469
DE-A-2 934 941
FR-A-1 559 912
US-A-3 663 204

(73) Titulaire: **INSTITUT DE RECHERCHES DE LA
SIDERURGIE FRANCAISE (IRSID)
Voie Romaine B.P. 64
F-57210 Maizières-lès-Metz (FR)**
(73) Titulaire: **CLECIM SA
107 boulevard de la Mission Marchand
F-92402 Courbevoie Cedex (FR)**

(72) Inventeur: **Maurer, Ghislain
2, rue des Anémones
F-57070 Metz (FR)**
Inventeur: **Mouchette, Alain
4, rue des Pavillons
F-57210 Semecourt (FR)**
Inventeur: **Forestier, Guy
1, rue Rachel
F-42170 Saint Rambert (FR)**

(74) Mandataire: **Ventavoli, Roger et al
INSTITUT DE RECHERCHES DE LA SIDERURGIE
FRANCAISE (IRSID) Station d'Essais Boîte
Postale 64
F-57210 Maizières-lès-Metz (FR)**

Courier Press, Leamington Spa, England.

## Description

L'invention concerne le réglage de la position d'une lance d'injection à l'interface laitier-métal dans un récipient métallurgique, notamment dans un four à arc à courant continu.

Dans ce qui suit, on se referera par commodité au cas du four à arcs, étant entendu que l'invention est d'application générale à tout récipient métallurgique, c'est-à-dire à tout récipient destiné à contenir un bain métallique, tel que de l'acier en fusion, surmonté par une couche de laitier.

Il est connu, lors de la décarburation de l'acier au four à arcs, d'insuffler de l'oxygène à l'aide d'une lance du type considéré ici. Cet oxygène doit être insufflé au niveau de l'interface laitier-métal pour éviter une consommation excessive de la lance et améliorer le bullage du laitier, lequel, en entourant mieux l'arc, réduit les pertes d'énergie et l'érosion.

La consommation progressive de l'extrémité de la lance dans le bain métallique oblige à enfoncer celle-ci au fur et à mesure du processus d'élaboration, au moyen du chariot sur lequel la lance est montée.

Dans les installations traditionnnelles, le réglage de l'enfoncement se fait empiriquement en fonction d'une estimation de l'opérateur.

On connaît cependant, d'après le document EP—A—0104747 (British Stell Corp.), un système de réglage automatique à partir d'un capteur acoustique placé à proximité du four. Mais les niveau sonores d'un four à arc, comme leurs variations, ont d'autres causes que la seule position de la lance et il n'est pas simple de la différencier, même à l'aide d'un filtrage des fréquences d'écoute.

On connaît également, par le document AU—A—493464, une méthode de détection du niveau d'un métal liquide par mesure de l'écart des potentiels électrochimiques entre une électrode immergée et d'une part le métal liquide, d'autre par le laitier qui le recouvre. Toutefois, cette méthode ne peut s'appliquer dès lors que des tensions élevées, très nettement supérieures à ces potentiels, risquent d'apparaître dans le bain, et cela de manière non contrôlée, ce qui est couramment le cas, en particulier dans un four à arcs.

Le but de l'invention est de proposer un procédé et un dispositif qui permettent de contrôler avec précision et fiabilité, la position de l'extrémité de la lance par rapport à l'interface métal-laitier, au fur et à mesure de son usure, et donc de pouvoir corriger le positionnement avec exactitude et même automatiquement.

Selon l'invention, le procédé de contrôle du positionnement d'une lance d'injection à l'interface laitier-métal dans un récipient métallurgique, notamment un four à arcs est caractérisé en ce qu'on boucle un circuit électrique comprenant la lance, le bain métallique et une borne de contact permanent avec ce dernier, on détecte les variations de résistance électrique de ce circuit au moyen d'un dispositif de détection couplé audit circuit par des moyens de couplage à isolement galvanique, les variations de exsistance étant représentatives des variations de position de ladite extrémité de la lance par rapport à l'interface metal-laitier. En fonction du signal représentatif de ces variations, on agit, le cas échéant, sur la position de la lance, Cette détection, basée sur la mauvaise conductivité électrique du laitier comparé au métal, est directement utilisée pour régler la position de la lance, soit par un opérateur, soit, de préférence, automatiquement. Dans ce cas, la détection d'une augmentation importante de résistance, traduisant l'éloignement de la lance de l'interface par consommation, déclenche des moyens moteurs équipant le chariot porte-lance; la détection subséquente d'une diminution brusque de résistance (retour à la normale) entraîne l'arrêt du chariot.

L'invention s'applique aussi bien au cas où la lance ne doit pas exactement être positionnée à l'interface métallaitier en fonctionnement. Le procédé de l'invention permet de détecter la position de l'interface, laquelle sert de référence: on peut ensuit enfoncer la lance d'une manière prédéterminée (par une programmation adéquate des moyens moteurs du chariot porte-lance). Afin de corriger au bout d'un certain temps, le positionnement de la lance enfoncée qui s'est partiellement consommée, il suiffit de remonter la lance et chercher à nouveau l'interface, pour ensuite enfoncer la lance à la profondeur prédéterminée.

Le dispositif de contrôle conforme à l'invention, comprend donc un circuit électrique bouclé sur la lance, le bain métallique et la borne de contact permanent avec le bain et une unité de détection des variations de résistance électrique dudit circuit électrique.

On remarquera que le circuit électrique se boucle par l'extrémité de la lance, ce qui permet de détecter précisément les variations de position de ladite extrémité par rapport à l'interface métal-laitier, quelles que soient les causes de ces variations (variation du niveau de l'interface métal-laitier ou consommation de l'extrémité de la lance).

Dans une variante de réalisation, adaptée aux fours à arcs à courant continu, la borne de contact est constituée par l'électrode de sole elle-même, et un transformateur (ou tout autre moyen d'isolement galvanique) est prévu entre le circuit électrique et l'unité de détection, afin d'isoler ce dernier du circuit de puissance du four, dont l'électrode de sole est l'un des éléements. De plus, dans ce cas, l'amplification de la résistance du circuit électrique de mesure par le carré du rapport de transformation, entraîne une meilleure sensibilité de détection. On aura compris que l'invention tire ainsi parti de la présence de l'électrode de sole qui équipe la plupart des fours à arcs à courant continu (DE—OS—2637632; FR—B—350524; FR—A—2566984).

Le dispositif de détection comporte avantageusement un pont de Wheatstone dont le déséquilibre consécutif à l'augmentation de la résistance dans le circuit mesuré est détecté, amplifié et traité de manière à pouvoir servir d'alarme ou de déclenchement du mouvement du chariot porte-lance.

L'injection d'un signal alternatif dans le circuit de détection, et via la transformateur, dans le circuit à mesurer, permet d'extraire par filtrage du signal mesuré, la part relative à la mesure de la résistance.

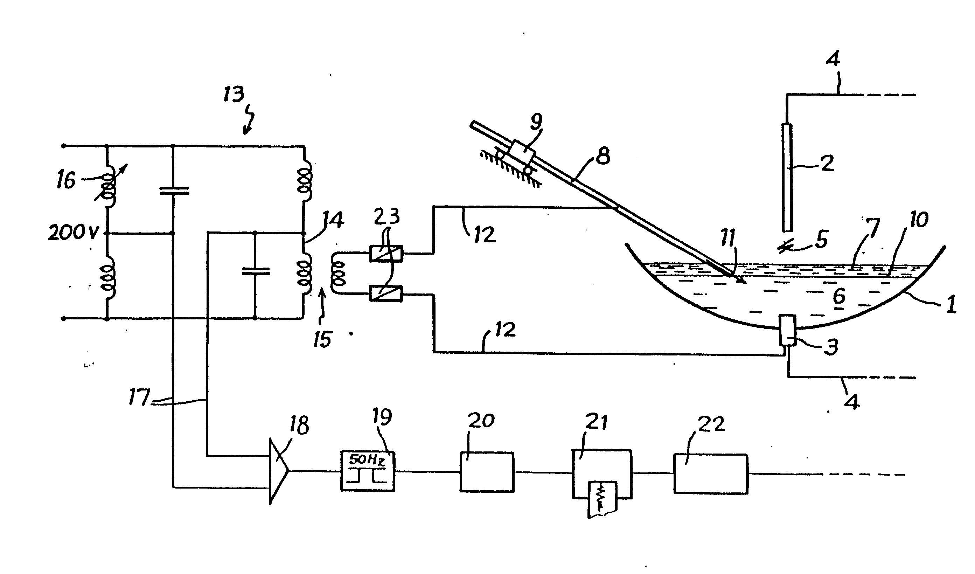

D'autres caractéristiques et avantages ressortiront de la description suivante d'un mode préféré de réalisation. Il sera fait référence à la figure unique annexée, qui représente un schéma de montage du dispositif de l'invention.

On y voit, représenté très grossièrement, le four électrique 1 équipé d'au moins une cathode 2 surmontant le bain métallique, et d'une anode de sole 3 au fond du four. Les électrodes 2 et 3 sont reliées par des lignes 4 à une alimentation convenable en courant continu. En service, un arc électrique 5 est créé entre les électrodes et à travers le bain métallique, composé de métal liquide 6 et du laitier surnageant 7.

Une lance d'injection 8 en acier garni de réfractaire est montée de manière appropriée sur un chariot de positionnement 9 motorisé, de mainière à pouvoir régler l'enfoncement exact de la lance dans le bain métallique. Cette lance insuffle, à l'interface 10 métal-laitier, de l'oxygène 11 grâce à une alimentation non représentée.

Selon l'invention, on boucle un circuit 12 comprenant la lance 8, le bain métallique 6, 7, et l'électrode de sole 3, ou du moins une partie de chacun de ces éléments. Ce circuit est protégé par des fusibles 23. La résistance de cette boucle verie essentiellement en fonction de la position de l'extrémité de la lance 8 par rapport à l'interface 10, les autres éléments de circuit ne variant pas.

L'unité de détection 13 est constituée par un pont de Wheatstone alimenté en courant alternatif (sous une tension de 200 V par exemple). Une branche 14 du pont est couplée au circuit 12 par un transformateur 15; cette branche 14 formant l'écoulement primaire dudit transformateur. L'équilibre du pont peut être réglé par le résistance variable 16 en début de mesure. On recueille en 17 la tension d'erreur aux bornes du pont, laquelle est amplifiée par l'amplificateur 18. Le signal sortant est filtré par le filtre 19 destiné à ne conserver que les oscillation propres du circuit de détection 13, à l'exclusion des oscillations parasites éventuellement induites par le voisinage du circuit de puissance du four. Le signal sortant est traité en 20 de mainière à fournir une valeur efficace indicative du déséquilibre du pont. Cette valeur efficace peut être traitée, enregistrée et visualisée en 21, ou être signalée par tout dispositif approprié: alarme sonore, etc., permettant de prendre conscience du mauvais positionnement de la lance et d'y remédier. De préférence, le réglage se fait automatiquement: le signal de déséquilibre est traité en 22 pour fournir un signal d'instruction au moteur du chariot 9 de la lance.

Comme l'interface 10 est une surface elle-même agitée, le signal enregistré en détection oscille constamment autour d'une valeur d'équilibre avec une faible amplitude. En revanche, dès que l'extrémité de la lance quitte l'interface 10, une transition de forte amplitude est détectée. Aussi, les instructions de positionnemment peuvent-elles n'être données que pour la détection d'un variation d'amplitude supérieure à une valeur de consigne prédéterminée, elle-même supérieure aux oscillations normales autour de la valeur d'équilibre.

L'invention peut aussi s'appliquer si le circuit de puissance est alimenté par un courant autre que continu. On pourra alors prévoir d'alimenter le circuit de détection à une fréquence différente de celle du circuit de puissance et de disposer dans le circuit de détection, un filtre éliminant les fréquences indésirables.

## Revendications

1. Procédé de contrôle du positionnement de l'extrémité d'une lance d'injection par rapport à l'interface laitier-métal dans un récipient métallurgique, caractérisé en ce qu'on boucle un circuit électrique (12) comprenant la lance (8), le bain métallique (6, 7) et une borne (3) de contact permanent avec ledit bain, et on détecte les variations de résistance électrique de ce circuit (12) au moyen d'une unité de détection (13) couplée audit circuit (12) par des moyens de couplage à isolement galvanique, ces variations de résistance étant représentatives des variations de position de ladite extrémité de la lance par rapport à l'interface métal-laitier.

2. Procédé selon la revendication 1, caractérisé en ce qu'on l'applique à un four à arcs à courant continu, la borne (3) de contact permanent avec le bain métallique étant constitutée par l'électrode de sole.

3. Procédé selon l'une des revendications 1 et 2 appliqué au régale de la position de la lance, caractérisé en ce que on agit sur la position de la lance lorsque la variation de résistance par rapport à une valeur d'équilibre prédéterminée est supérieure à une valeur de consigne, afin de ramener ladite variation à cette valeur.

4. Dispositif de contrôle du positionnement de l'extrémité d'une lance d'injection par rapport à l'interface laitier-métal dans un récipient métallurgique, caractérisé en ce qu'il comprend:
   — un circuit électrique (12) bouclé sur la lance (8), le bain métallique (6, 7) et une borne (3) de contact permanent avec ledit bain,
   — et une unité de détection (13) des variations de résistance électrique dudit circuit électrique (12), ladite unité de détection (13) étant couplée audit circuit (12) par des moyens de couplage à isolement galvanique.

5. Dispositif de contrôle et de réglage du positionnement de l'extrémité d'une lance d'injection par rapport à l'interface laitier-métal dans un récipient métallurgique, caractérisé en ce qu'il comprend:
   — un circuit électrique (12) bouclé sur la lance (8), le bain métallique (6, 7) et une borne (3) de contact permanent avec ledit bain,

— et une unité de détection (13) des variations de résistance électrique dudit circuit électrique (12), ladite unité de détection (13) étant couplée audit circuit (12) par des moyens de couplage à isolement galvanique,

— et en ce que l'unité de détection est associée à un dispositif de commande (18—22) du mouvement d'un chariot (9) porte-lance.

6. Dispositif selon la revendication 4 ou 5, caractérisé en ce que lesdits moyens de couplage à isolement galvanique sont constitués par un transformateur (15), et en ce que l'unité de détection comporte un pont de Wheatstone (13) dont une branche (14) comprend un bobinage dudit transformateur (15).

7. Dispositif selon l'une des revendications 4 à 6, caractérisé en ce que la borne (3) de contact permanent avec le bain métallique est constituée par l'électrode de sole d'un four à arcs à courant continu, ledit four constituant ledit récipient métallurgique.

**Patentansprüche**

1. Verfahren zum Regeln der Lage des Endes einer Blaslanze relativ zur Grenzfläche von Schlacke und Metall in einem metallurgischen Gefäss, dadurch gekennzeichnet, das man einen elektrischen Kreis schliesst, der die Lanze (8), das Metallbad (6, 7) und eine mit dem Bad ständig in Kontakt befindliche Klemme (3) umfasst, und dass man die Änderungen des elektrischen Widerstandes des Kreises (12) mit Hilfe einer mit diesem Kreis (12) über glavanisch isolierte Kupplungseinrichtungen angeschlossenen Erfassungseinheit (13) feststellt, wobei diese Widerstandsänderungen für Änderungen der Lage dieses Endes der Lanze relativ zur Grenzfläche zwischen Metall und Schlacke repräsentative sind.

2. Verfahren nach Anspruch 1, dadurch gekennzeichnet, dass man es an einem Gleichstrom-Lichtbogenofen anwendet, wobei die ständig in Kontakt mit dem Metallbade befindliche Klemme von der Sohlenelektrode gebildet ist.

3. Verfahren nach Anspruch 1 oder 2, das auf die Lageregelung der Lanze angewandt wird, dadurch gekennzeichnet, dass man auf die Lage der Lanze einwirkt, wenn die Abweichung des Widerstandes relativ zu einem vorbestimmten Gleichgewichtswert oberhalb eines Sollwertes liegt, um die Abweichung auf diesen Wert zurückzuführen.

4. Regelvorrichtung für die Lage des Endes einer Blaslanze relativ zur Grenzfläche zwischen Schlacke und Metall in einem metallurgischen Gefäss, dadurch gekennzeichnet, dass sie aufweist:

— einen mit der Lanze (8), dem Metallbade (6, 7) und einer ständig mit dem Bade in Kontakt befindlichen Klemme (3) in Verbindung stehenden elektrischen Kreis (12),

— und eine Erfassungseinheit (13) für elektrische Widerstandsänderungen dieses elektrischen Kreises (12), wobei die Erfassungseinheit (13) an den Kreis (12) über galvanisch isolierte Kupplungseinrichtungen angeschlossen ist.

5. Steur- und Regelvorrichtung für die Lage des Endes einer Blaslaze relativ zur Grenzfläche zwischen Schlacke und Metall in einem metallurgischen Gefäss, dadurch gekennnzeichnet, dass sie aufweist:

— einen mit der Lanze (8), dem Metallbade (6, 7) und einer ständig mit dem Bade in Kontakt befindlichen Klemme (3) in Verbindung stehenden elektrischen Kreis (12),

— und eine Erfassungseinheit (13) für elektrische Widerstandsänderungen dieses elektrischen Kreises (12), wobei die Erfassungseinheit (13) an den Kreis (12) über galvanisch isolierte Kupplungseinrichtungen angeschlossen ist,

— und dass die Erfassungseinheit einer Steuereinrichtung (18—22) für die Bewegung eines die Lanze tragenden Supports (9) zugeordnet ist.

6. Vorrichtung nach Anspruch 4 oder 5, dadurch gekennzeichnet, dass die galvanisch isolierten Kupplungseinrichtungen von einem Transformator (15) gebildet sind, und dass die Erfassungseinheit eine Wheatstone-Brücke (13) aufweist, an welcher ein Zweig (14) eine Spule des Transformators (15) umfasst.

7. Vorrichtung nach einem der Annsprüche 4 bis 6, dadurch gekennzeichnet, dass die ständig mit dem Metallbade in Kontakt stehende Klemme (3) von der Sohlenelektrode eines Gleichstrom-Lichtbogenofens gebildet ist, welcher Ofen das metallurgische Gefäss darstellt.

**Claims**

1. Process to control the position of the end of an injection lance relative to the slag/metal interface in a metallurgical vessel, characterized in that an electrical circuit (12) comprising the lance (8), the metal bath (6, 7) and a terminal (3) in permanent contact with the said bath is established, and the variations in the electrical resistance of this circuit (12) are detected by means of a detection unit (13) coupled to the said circuit (12) by coupling means with galvanic insulation, these variations in resistance representing variations in the position of the said end of the lance relative to the metal/slag interface.

2. Process according to Claim 1, characterized in that it is applied to a direct-current arc furnace, the terminal (3) in permanent contact with the metal bath consisting of the hearth electrode.

3. Process according to one of Claims 1 and 2 applied to the adjustment of the position of the lance, characterized in that the position of the lance is adjusted when the variation in resistance relative to a predetermined equilibrium value is greater than a reference value, in order to bring the said variation back to this value.

4. Device to control the position of the end of an injection lance relative to the slag/metal interface in a metallurgical vessel, characterized in that it comprises:

— an electrical circuit (12) established between the lance (8), the metal bath (6, 7) and a terminal (3) in permanent contact with the said bath,

— and a unit (13) for detecting variations in the electrical resistance of the said electrical circuit (12), the said detection unit (13) being coupled to the said circuit (12) by coupling means with galvanic insulation.

5. Device to control and adjust the position of the end of an injection lance relative to the slag/metal interface in a metallurgical vessel, characterized in that it comprises:

— an electrical circuit (12) established between the lance (8), the metal bath (6, 7) and a terminal (3) in permanent contact with the said bath,

— and a unit (13) for detecting variations in the electrical resistance of the said electrical circuit (12), the said detection unit (13) being coupled to the said circuit (12) by coupling means with galvanic insulation.

— and in that the detection unit is associated with a device (18—22) for controlling the movement of a lance-holder carriage (9).

6. Device according to Claim 4 or 5, characterized in that the said coupling means with galvanic insulation consist of a transformer (15), and in that the detection unit comprises a Wheatstone bridge (13), one branch (14) of which comprises a winding of the said transformer (15).

7. Device according to one of Claims 4 to 6, characterized in that the terminal (3) in permanent contact with the metal bath consists of the hearth electrode of a direct-current arc furnace, the said furnace forming the said metallurgical vessel.